# EUROPÄISCHE PATENTSCHRIFT

(11) **EP 2 317 097 B1**
(45) Veröffentlichungstag und Bekanntmachung des Hinweises auf die Patenterteilung: **17.04.2013**
(21) Anmeldenummer: 10450163.0
(22) Anmeldetag: 28.10.2010
(51) Int. Cl.: B02C 18/24

(54) **Antrieb für schwere Geräte**
Drive for heavy devices
Entraînement pour appareils lourds

(30) Priorität: 29.10.2009 AT 17112009
(43) Veröffentlichungstag der Anmeldung: 04.05.2011
(73) Patentinhaber: Stefan, Hartl, 4332 Au an der Donau (AT); Mag. Paul, Voithofer, 4400 Steyr (AT)
(72) Erfinder: Stefan, Hartl, 4332 Au an der Donau (AT); Mag. Paul, Voithofer, 4400 Steyr (AT)
(74) Vertreter: Forsthuber, Martin

(56) Entgegenhaltungen:
- WO-A1-02/36264
- WO-A1-2008/128562
- CN-Y- 2 607 196
- DE-A1- 2 917 766
- DE-U1- 9 400 147
- FR-A1- 2 241 728
- GB-A- 545 814
- SU-A1- 1 472 199
- US-A- 5 720 358

## Beschreibung

Die Erfindung bezieht sich auf einen Antrieb für schwere Geräte mit einem Antriebsmotor, welcher über eine Kupplung und einen Riementrieb mit einem Gerät in Antriebsverbindung steht, wobei der Antriebsmotor auch dazu eingerichtet ist, Nebenaggregate anzutreiben wobei der Antrieb ein Verteilergetriebe aufweist, welches zumindest einen Nebenabtrieb zum Anbau zumindest eines Nebenaggregats besitzt, und wobei zwischen einer Ausgangswelle für den Antrieb des Gerätes und der primären Riemenscheibe des Riementriebes eine geschlossene Hydraulikkupplung angeordnet ist.

Antriebe dieser Art dienen beispielsweise zum Antrieb von schweren Wellen bei Baumaschinen, zum Antrieb von Brechanlagen, Schreddern etc., wobei die Geräte stationär oder fahrbar sein können. Als Antriebsmotor wird üblicherweise ein Dieselmotor verwendet, doch ist in bestimmten Fällen auch die Verwendung eines Elektromotors möglich. Der Antrieb des schweren Geräts erfolgt meist über einen Keilriementrieb, da ein solcher, nicht zuletzt wegen des niedrigen Kraftverlustes, am wirtschaftlichsten ist. Als Kupplung wird üblicherweise eine Trockenkupplung oder ein Flüssigkeitskupplung verwendet. Eine Trockenkupplung hat den Nachteil, dass es vor allem in der Startphase, bei der Beschleunigung der großen Massen, zu einem Schlupf kommt, der zu einem hohen Verschleiß der Reibbelege führt. Die hohe Belastung der gesamten Anlage, beispielweise bei einer Überfüllung eines Brechers und eine oft nicht fachgerechte Bedienung führen dann zu einer Beschädigung der Kupplungseinheit mit daraus folgenden langen Stillstandszeiten und hohen Kosten. Eine Flüssigkeitskupplung arbeitet zwar wegen der Kraftübertragung über Öl verschleißarm, doch ist es erforderlich, dass eine Temperatur und Drucküberwachung vorgesehen ist und ebenso auch ein zusätzlicher Kühlkreislauf.

Ein weiteres Problem der bekannten Antriebe liegt darin, dass der Antriebsmotor auch Nebenaggregate, z. B. Hydraulikpumpen oder Generatoren antreiben muss. Hydraulikpumpen werden beispielsweise für einen Raupenantrieb des gesamten Aufbaus oder für den Antrieb von Förderbändern benötigt. Es ist daher erforderlich an dem Antriebsmotor entsprechende zusätzliche Abtriebe für die Nebenaggregate vorzusehen, was einen kostspieligen Umbau erforderlich machen kann

Ein Antrieb der eingangs genannten Art ist in der WO 02/36264 A1 beschrieben.

Es ist eine Aufgabe der Erfindung, die genannten Nachteile zu beseitigen, bzw. zu mindern.

Diese Aufgabe wird mit einem Antrieb der eingangs genannten Art dadurch gelöst, dass die Abtriebswelle des Antriebsmotors einerseits über eine im Stillstand schaltbare Kupplung mit der Ausgangswelle für den Antrieb des Gerätes an-/abschaltbar verbunden ist und andererseits mit dem Eingang des Verteilergetriebes in Dauereingriff steht und, dass an der Ausgangsseite des Verteilergetriebes ein Stützlager für die Ausgangswelle für den Antrieb des Gerätes angeordnet ist.

Ein erfindungsgemäßer Antrieb bietet verschiedene Vorteile. Einerseits kann durch die im Stillstand schaltbare Kupplung kein Verschleiß entstehen und andererseits ermöglicht die Hydraulikkupplung einen Sanft-Anlauf des Getriebes, wobei die Kupplung für Wartungsarbeiten oder bei Überstellungen stillgelegt werden kann und auch keine zusätzliche Überwachung oder einen Kühlkreislauf benötigt. Durch das Verteilergetriebe können Nebenaggregate, wie beispielsweise Hydraulikpumpen angetrieben werden, wobei hier eine große Flexibilität in der Art und der Anzahl solcher Nebenaggregate besteht, da an dem Antriebsmotor selbst keinerlei Eingriffe erforderlich sind um die Nebenaggregate anzutreiben.

Wenn an der Ausgangsseite des Getriebes ein Stützlager für die Ausgangswelle für den Antrieb des Geräts angeordnet ist, können die auftretenden Kräfte verlässlich abgeleitet werden. Dabei ist das Stützlager mit Vorteil ein Teil des Getriebes, somit eine Einheit mit diesem.

Es ist von Vorteil, wenn die schaltbare Kupplung in dem Verteilergetriebe zwischen der mit der Abtriebswelle des Antriebmotors starr verbundenen Eingangswelle des Getriebes und der zu dieser koaxialen Ausgangswelle für den Antrieb des Geräts angeordnet ist. Dadurch lässt sich eine kompakte Bauart erreichen. Überdies bietet die Erfindung die Möglichkeit, den Antriebsmotor einfach aus bzw. einzubauen, sodass ein Austausch des Motors gegen einen anderen oder ein vorübergehender Ausbau zu Wartungszwecken leicht möglich ist, ohne dass Probleme durch den Ab- oder Anbau der Nebenaggregate entstehen.

Es ist in Hinblick auf eine einfache Bedienung empfehlenswert, wenn die schaltbare Kupplung über einen elektromechanischen Linearantrieb schaltbar ist.

Zweckmäßigerweise ist eine drehelastische Kupplung zwischen dem Eingang des Verteilergetriebes und der Abtriebswelle des Antriebsmotors vorgesehen, um die Übertragung von Drehschwingungen des Motors auf das Getriebe zu verringern

In Hinblick auf einen universellen Einsatz auch in Gebieten, bei welchen eine Stromversorgung problematisch ist, bzw. in Hinblick auf ein fahrbares Gerät, ist es vorteilhaft, wenn der Antriebsmotor ein Verbrennungsmotor ist. Wenngleich durch den erfindungsgemäßen Aufbau bereits eine gewisse Trennung zwischen dem Verbrennungsmotor, der im Betrieb hohe Temperaturen erreichen kann und Hydraulikaggregaten gegeben ist, ist es zweckmäßig, wenn zwischen dem Verteilergetriebe und dem Verbrennungsmotor eine Trennwand angeordnet ist.

Für den Antrieb schwerer Geräte, wie insbesondere Brechern und Schreddern empfiehlt es sich, wenn der Antrieb ein Keilriemenantrieb ist, da dieser in Hinblick auf die Kraftübertragung hier vorteilhaft ist und auch ein einfacher Austausch eines oder mehrerer Keilriemen des Riementriebs möglich ist.

Die Erfindung ist im Folgenden anhand beispielsweise Ausführungsformen näher erläutert, die in Zeichnung veranschaulicht sind. In dieser zeigen
- Fig. 1: eine schematische Draufsicht auf einen Antrieb nach dem Stand der Technik,
- Fig. 2: in ähnlicher Darstellung einen Antrieb gemäß der Erfindung,
- Fig. 3: eine Ansicht des Verteilergetriebes in Richtung des Pfeils III der Fig. 2 bei abgenommener Riemenscheibe und hydraulischer Kupplung und
- Fig. 4: eine Teilansicht des Antriebs nach Fig. 2 in Richtung des Pfeils IV dieser Figur.

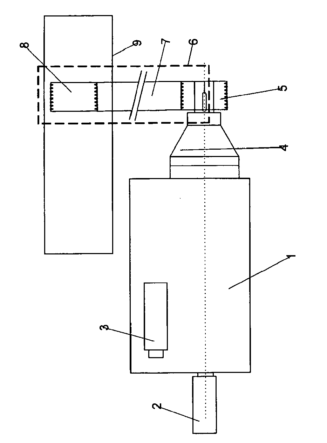

In Fig. 1 ist ein Antriebsmotor 1, nämlich ein Dieselmotor, schematisch gezeigt, wobei der Antriebsmotor zwei Nebenaggregate 2, 3 antreiben kann, z. B. eine Hydraulikpumpe und einen Stromgenerator. Der Antriebsmotor 1 ist über eine Kupplung 4, die eine Trockenkupplung oder eine hydraulische Kupplung sein kann, mit der Riemenscheibe 5 eines Riementriebs 6 verbunden. Über diesen Riementrieb 6 wird mittels Keilriemen 7 eine weitere Riemenscheibe 8 angetrieben, die einem schweren Gerät 9 zugehört, beispielsweise einem Gesteinsbrecher, einem Schredder oder dergleichen.

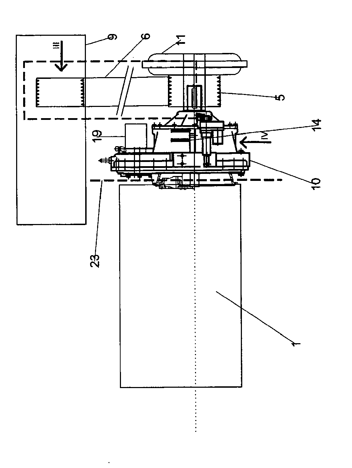

Fig. 2 zeigt einen Antrieb nach der Erfindung, wobei für gleiche Teile gleiche Bezugszeichen verwendet wurden. Im Gegensatz zu dem Antrieb nach dem Stand der Technik gemäß Fig. 1 ist hier der Antriebsmotor 1 nicht mit irgendwelchen Nebenaggregaten bestückt. Weitere wesentliche Bauteile des Antriebs sind ein dem Motor 1 nachgeschaltetes Verteilergetriebe 10 sowie eine Hydraulikkupplung 11, welche kinematisch zwischen einer Ausgangswelle 20 des Getriebes bzw. Motors und der primären Riemenscheibe 5 des Riementriebs 6 gelegen ist.

Innerhalb des Gehäuses 13 des Verteilergetriebes 10 ist eine nur im Stillstand schaltbare mechanische Kupplung 14, z.B. eine Klauenkupplung, vorgesehen, die über einen elektromechanischen Linearantrieb 15 betätigbar ist.

Die Ausgangswelle 16 des Motors 1 ist über die schaltbare Kupplung 14 mit der Ausgangswelle 12 des Getriebes verbindbar, wobei diese Ausgangswelle 12 mit dem Eingang der Hydraulikkupplung 11 in Verbindung steht, wogegen die Riemenscheibe 5 mit dem Ausgang der hydraulischen Kupplung 11 in Verbindung steht.

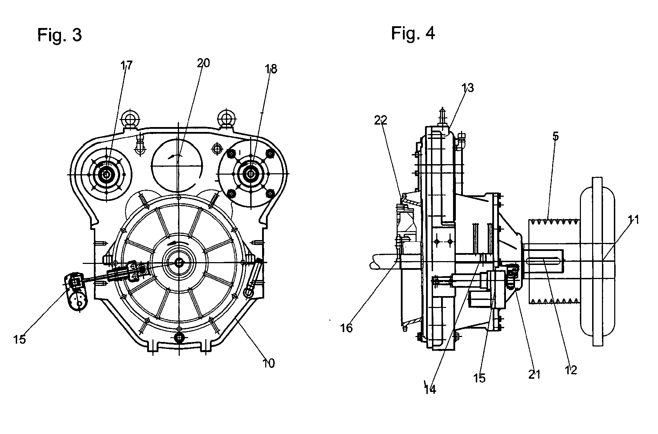

Die Ausgangswelle 16 des Motors 1 steht weiters mit dem Eingang des Verteilergetriebes 10 in ständiger Verbindung, so dass der Motor auch Nebenabtriebe 17, 18 ständig antreibt. An diese Abtriebe, im vorliegenden Fall zwei montierte, können Nebenaggregate 19 angeschlossen werden, wobei aus Fig. 2 beispielsweise eine Hydraulikpumpe hervorgeht, welche an den Abtrieb 17 angeschlossen ist. Ebenso kann an den Abtrieb 18 in nicht gezeigter Weise eine weitere Hydraulikpumpe oder ein elektrischer Generator angeschlossen werden. Aus Fig. 3 ist auch eine Abdeckung 20 gezeigt, nach deren Entfernung hier ein weiterer Abtrieb montiert werden könnte.

Die Abtriebswelle 16 des Antriebsmotors 1 und die Ausgangswelle 12 liegen koaxial zueinander, wobei die schaltbare Kupplung 14, wie bereits erwähnt, zwischen diesen beiden Wellen wirkt. Die Ausgangswelle ist überdies durch ein massives Stützlager 21, welches innerhalb des Gehäuses 13 des Verteilergetriebes 10 liegt und somit Teil dieses Getriebes ist, abgestützt. Außerdem ist vorteilhafterweise eine drehelastische Kupplung 22 zwischen dem Eingang des Verteilergetriebes 10 und der Abtriebswelle 16 des Antriebsmotors 1 vorgesehen, um die Übertragung von Drehschwingungen des Motors 1 auf das Verteilergetriebe 10 zu verringern.

Wie weiters auf Fig. 2 hervorgeht, kann man zwischen dem Antriebsmotor 1 und dem Verteilergetriebe 10 eine Trennwand 23 vorsehen, welche von besonderen Vorteil bei Baumaschinen ist, da sie eine saubere Trennung des heißen Dieselmotors von den hydraulischen Pumpen ermöglicht. Bei Leckage der Hydraulik kann es immer wieder zu starker Verschmutzung des Motors und der Kühler kommen, es kann Staub anhaften und dies kann letztlich zu Motorbränden durch Entzündung es Staub-Öl-Gemisches führen. Ein Vergleich der Fig. 1, welche den Stand der Technik zeigt, mit der Fig. 2, welche die Erfindung zeigt, macht deutlich, dass gerade bei der Erfindung ein einfacher Einbau einer Trennwand möglich ist und die genannte Gefahr der Verschmutzung des Motors mit Hydrauliköl einfach zu vermeiden ist, wobei auch die Luftführung im Motorraum optimiert werden kann.

Es sei noch erwähnt, dass das Verteilergetriebe ein an sich handelsübliches Verteilergetriebe, z. B. der Firma Stiebel, ist, welches durch den Einbau der schaltbaren Kupplung 14 und des Stützlagers 21 modifiziert wurde. Ebenso ist die hydraulische Kupplung 11, eine Kupplung von geschlossener Bauart und handelsüblich, z. B. im Produktionsprogramm der Firma Transfluid enthalten.

### LISTE DER BEZUGSZEICHEN

- 1: Antriebsmotor
- 2: Nebenaggregat
- 3: Nebenaggregat
- 4: Kupplung
- 5: Riemenscheibe
- 6: Riemenantrieb
- 7: Keilriemen
- 8: Riemenschreibe
- 9: schweres Gerät
- 10: Verteilergetriebe
- 11: Hydraulikkupplung
- 12: Ausgangswelle
- 13: Gehäuse
- 14: Kupplung, schaltbar
- 15: Antrieb
- 16: Ausgangswelle von 1
- 17: Nebenabtrieb
- 18: Nebenabtrieb
- 19: Hydraulikpumpe
- 20: Abdeckung
- 21: Stützlager
- 22: Drehelastische Kupplung
- 23: Trennwand

## Patentansprüche

1. Antrieb für schwere Geräte, mit einem Antriebsmotor (1), welcher über eine Kupplung (14) und einen Riementrieb (6) mit einem Gerät in Antriebsverbindung steht, wobei der Antriebsmotor auch dazu eingerichtet ist, Nebenaggregate (2, 3, 19) anzutreiben, wobei der Antrieb ein Verteilergetriebe (10) aufweist, welches zumindest einen Nebenabtrieb (17, 8) zum Anbau zumindest eines Nebenaggregats (19) besitzt, und wobei zwischen einer Ausgangswelle (12) für den Antrieb des Gerätes und der primären Riemenscheibe (5) des Riementriebes (6) eine geschlossene Hydraulikkupplung (11) angeordnet ist,
**dadurch gekennzeichnet, dass**
die Abtriebswelle (16) des Antriebsmotors (1) einerseits über eine im Stillstand schaltbare Kupplung (14) mit der Ausgangswelle (12) für den Antrieb des Gerätes (9) an-/abschaltbar verbunden ist und andererseits mit dem Eingang des Verteilergetriebes (10) in Dauereingriff steht und, dass an der Ausgangsseite des Verteilergetriebes (10) ein Stützlager (21) für die Ausgangswelle (12) für den Antrieb des Gerätes (9) angeordnet ist.

2. Antrieb nach Anspruch 1, **dadurch gekennzeichnet, dass** die schaltbare Kupplung (14) in dem Verteilergetriebe (10) zwischen dem mit der Abtriebswelle (16) des Antriebsmotors (1) starr verbundenen Eingang des Getriebes und der koaxialen Ausgangswelle (12) für den Antrieb des Gerätes (9) angeordnet ist.

3. Antrieb nach Anspruch 1 oder 2, **dadurch gekennzeichnet, dass** das Stützlager (21) Teil des Getriebes (10) ist.

4. Antrieb nach einem der Ansprüche 1 bis 3, **dadurch gekennzeichnet, dass** die schaltbare Kupplung (14) über einen elektromechanischen Linearantrieb (15) schaltbar ist.

5. Antrieb nach einem der Ansprüche 1 bis 4, **dadurch gekennzeichnet, dass** zwischen dem Eingang des Verteilergetriebes (10) und der Abtriebswelle (16) des Antriebsmotors (1) eine drehelastische Kupplung (22) vorgesehen ist.

6. Antrieb nach einem der Ansprüche 1 bis 5, **dadurch gekennzeichnet, dass** der Antriebsmotor (1) ein Verbrennungsmotor ist.

7. Antrieb nach Anspruch 6, **dadurch gekennzeichnet, dass** zwischen dem Verteilergetriebe (10) und dem Verbrennungsmotor (1) eine Trennwand (23) angeordnet ist.

8. Antrieb nach einem der Ansprüche 1 bis 7, **dadurch gekennzeichnet, dass** der Riementrieb (6) ein Keilriementrieb ist.

## Claims

1. A drive unit for heavy equipment, comprising a drive motor (1), which is in driving engagement with a piece of equipment via a coupling (14) and a belt drive (6), the drive motor also being configured to drive auxiliary units (2, 3, 19), the drive unit comprising a transfer case (10), which has at least one power take-off (17, 8) for attaching at least one auxiliary unit (19), and a closed hydraulic coupling (11) being arranged between an output shaft (12) for driving the piece of equipment and the primary pulley (5) of the belt drive (6),
**characterized in that**
the output shaft (16) of the drive motor (1) is not only connected in an activatable/deactivatable manner to the output shaft (12) for driving the equipment (9) via a coupling (14) that can be engaged and disengaged during standstill, but is also in permanent engagement with the input of the transfer case (10), and a support bearing (21) for the output shaft (12) for driving the equipment (9) is arranged on the output side of the transfer case (10).

2. The drive unit according to claim 1, **characterized in that** the engageable and disengageable coupling (14) is arranged in the transfer case (10) between the input of the transfer case, which is rigidly connected to the output shaft (16) of the drive motor (1), and the coaxial output shaft (12) for driving the equipment (9).

3. The drive unit according to claim 1 or 2, **characterized in that** the support bearing (21) is part of the transfer case (10).

4. A drive unit according to any one of claims 1 to 3, **characterized in that** the engageable and disengageable coupling (14) can be engaged and disengaged by way of an electromechanical linear drive (15).

5. A drive unit according to any one of claims 1 to 4, **characterized in that** a torsionally flexible coupling (22) is provided between the input of the transfer case (10) and the output shaft (16) of the drive motor (1).

6. A drive unit according to any one of claims 1 to 5, **characterized in that** the drive motor (1) is an internal combustion engine.

7. The drive unit according to claim 6, **characterized in that** a partition (23) is arranged between the transfer case (10) and the internal combustion engine (1).

8. A drive unit according to any one of claims 1 to 7, **characterized in that** the belt drive (6) is a V-belt drive.

## Revendications

1. Dispositif d'entraînement pour appareils lourds, avec un moteur d'entraînement (1) relié par entraînement à un appareil par le biais d'un accouplement (14) et d'une transmission par courroie (6), dans lequel le dispositif d'entraînement comporte un mécanisme de distribution (10) possédant au moins une prise de mouvement auxiliaire (17, 8) pour le montage d'au moins un agrégat auxiliaire (19), et dans lequel un accouplement hydraulique fermé (11) est agencé entre un arbre de sortie (12) destiné à l'entraînement de l'appareil et la poulie à courroie primaire (5) de la transmission par courroie (6),
**caractérisé en ce que**
l'arbre de sortie (16) du moteur d'entraînement (1) est relié d'une part à l'arbre de sortie (12) destiné à l'entraînement de l'appareil (9), de manière à pouvoir être commuté en marche/arrêté, par un accouplement (14) apte à être arrêté, et se trouve d'autre part en prise permanente avec l'entrée du mécanisme de distribution (10), et **en ce qu'**un palier d'appui (21) est agencé du côté sortie du mécanisme de distribution (10), pour l'arbre de sortie (12) destiné à l'entraînement de l'appareil (9).

2. Dispositif d'entraînement selon la revendication 1, **caractérisé en ce que** l'accouplement commutable (14) située dans le mécanisme de distribution (10) est agencé entre l'entrée du mécanisme de distribution reliée fixement à l'arbre de sortie (16) du moteur d'entraînement (1) et l'arbre de sortie (12) coaxial destiné à l'entraînement de l'appareil (9).

3. Dispositif d'entraînement selon la revendication 1 ou 2, **caractérisé en ce que** le palier d'appui (21) fait partie du mécanisme de distribution (10).

4. Dispositif d'entraînement selon l'une des revendications 1 à 3, **caractérisé en ce que** l'accouplement commutable (14) peut être commuté par le biais d'un entraînement linéaire électromécanique (15).

5. Dispositif d'entraînement selon l'une des revendications 1 à 4, **caractérisé en ce qu'**un accouplement élastique en rotation (22) est prévu entre l'entrée du mécanisme de distribution (10) et l'arbre de sortie (16) du moteur d'entraînement (1).

6. Dispositif d'entraînement selon l'une des revendications 1 à 5, **caractérisé en ce que** le moteur d'entraînement (1) est un moteur à combustion.

7. Dispositif d'entraînement selon la revendication 6, **caractérisé en ce qu'**une paroi de séparation (23) est agencée entre le mécanisme de distribution (10) et le moteur à combustion (1).

8. Dispositif d'entraînement selon l'une des revendications 1 à 7, **caractérisé en ce que** la transmission par courroie (6) est une transmission par courroie trapézoïdale.
